# EUROPEAN PATENT SPECIFICATION

(11) **EP 1 768 246 B1**
(45) Date of publication and mention of the grant of the patent: **17.10.2012**
(21) Application number: 04731840.7
(22) Date of filing: 09.05.2004
(51) Int. Cl.: H02N 6/00, H01M 2/36, H01M 10/46, H01M 10/48, H02J 7/35, H01L 31/058

(54) **SOLAR POWER GENERATION SYSTEM**
SOLARSTROM-ERZEUGUNGSSYSTEM
SYSTEME DE PRODUCTION D'ENERGIE SOLAIRE

(43) Date of publication of application: 28.03.2007
(73) Proprietor: Li, Yun, Macau (CN); Poon, Lock Kee Rocky, Macau (CN)
(72) Inventor: Li, Yun, Macau (CN); Poon, Lock Kee Rocky, Macau (CN)
(74) Representative: Edlund, Fabian
(86) International application number: PCT/CN2004/000463
(87) International publication number: WO 2005/109622

(56) References cited:
- EP-A1- 0 855 634
- EP-A2- 0 116 331
- EP-A2- 0 116 331
- DE-A1- 4 412 068
- DE-A1- 19 617 397
- DE-U1- 20 001 375
- GB-A- 2 381 964
- JP-A- 1 086 460
- JP-A- 11 299 127
- JP-A- 2000 055 479
- JP-A- 2001 095 165
- US-A- 6 106 968

## Description

### Technical Field

The invention relates to a solar power generating system, and particularly to a solar power generating system in which storage batteries are directly charged with the electric energy generated by solar cells, and the storage batteries directly supply a DC current, or supply an AC current by using a converter.

### Background Art

In a typical application system using solar cells, storage batteries are charged by solar cells so as to store electric energy, and then the storage batteries directly supply a DC current to a load, or supply an AC current to a load after the DC current output from the storage batteries is converted to an AC output. This type of application system, which has storage batteries for storing electric energy, could store electric energy generated by the solar cells at daytime and supply the stored electric energy at night, so as to fulfill the practical requirement for a use of the electric energy.

In the prior art, the solar power generating system has a voltage converter between solar cells and storage batteries.

One type of the converter converts a variable voltage from solar cells to a prescribed constant voltage which is used to charge storage batteries. For example, Japanese patent application laid-open H02-023042 discloses such a charging device. Said prescribed constant voltage should be no less than such a value that the storage batteries could be fullcharged. However, when a light intensity in the environment is larger than a standard light intensity, the output voltage of solar cells will be larger than a prescribed charging voltage. In order to obtain a constant charging voltage, the voltage converter will filter out the part of the output that is larger than the prescribed charging voltage. That is, in order to meet the charging requirement of the storage batteries, a part of the electric energy generated by the solar cells is discarded by the voltage converter, instead of being supplied to the storage batteries. Consequently, those voltage converters providing a constant charging voltage can only have an energy conversion efficiency of no more than 70%.

Another type of the voltage converter is controlled with Pulse-Width Modulation (PWM) method. For example, Chinese patent No. 97110965.6 discloses a solar power charging system, in which a voltage converter circuit comprising a chopper and a PWM controller is provided between solar cells and storage batteries. The chopper is used to convert a DC voltage to a prescribed value, and the PWM controller detects a maximum output power of the solar cells under various daylight conditions and at various ambient temperatures, and exerts a PWM control over the chopper so that the chopper operates in a state of providing a maximum power output from the solar cells. Thus, the storage batteries could be charged in the state of maximum power output from the solar cells. This type of voltage converter could achieve an optimum power matching with the solar cells so as to improve the charging efficiency. However, the voltage converter brings the problems such as a complex circuit and an increased cost.

Moreover, in the above power generating system having a voltage converter, because the solar cells, the voltage converter and the storage batteries form a loop and the voltage converter as a resistor has an effect of voltage division, the charging voltage applied to the storage batteries is lowered. Consequently, the charging efficiency is decreased. That is, the voltage converter itself consumes the electric energy generated by the solar cells, which will provide a reduced electric energy to the storage batteries.

The simplest solar power generating system is the one obtained by directly connecting solar cells to storage batteries. In such a charging system, the peak value of an output voltage from solar cells should be larger than the value that the storage batteries could be fullcharged. However, since there is lack of a voltage conversion circuit, which also provides the function of protection against an overvoltage, the output voltage of the solar cells might be excessively high and an overcharge may occur. Consequently, the storage batteries will be damaged.

The damages caused by an excessively high charging voltage include: severe water loss, rapid consumption of the electrolyte and the polar plate, in which the major reason for a failure of storage batteries is water loss. Therefore, the problem of water loss should be solved in a power generating system in which the storage batteries are directly charged.

For example, DE 19617397 describes a charging process for lead/acid batteries using solar cells, and a charging arrangement comprising solar panels and diodes.

In GB 2381964, a portable power supply device comprising a Solar panel for converting solar energy into electrical charge, is described. The device further comprises a charge storing device for storing the charge generated by the solar panels.

US 6106968, describes a fluid fill system for a battery comprising a fluid determination circuit which determines the quantify of fill fluid in the battery, and a controller, coupled to the determination circuitry, for filling the battery.

Furthermore, in EP 0116331, a circuit arrangement for charging an NiCd-accumulator with current supplied by solar cells, is described.

### Summary of the Invention

To solve the above problems, the inventor proposes a solar power generating system in which storage batteries are directly charged with the electric energy generated from solar cells and the storage batteries supply the electric energy to a load.

According to the invention, a solar power generating system is provided the solar power generating system, comprising solar cells, storage batteries, and a diode connected in series between the solar cells and the storage batteries, an anode and a cathode of the diode being connected to a positive electrode of the solar cells and a positive electrode of the storage batteries, respectively,
wherein the solar cells directly charges the storage batteries, and the solar power generating system also comprises a water-filling device coupled to the storage batteries, which detects an amount of lost water in the storage batteries by using an electrolyte level sensor, the electrolyte level sensor comprising a floater in the electrolyte solution, when the electrolyte level is decreased to be lower than a lower limit, the floater activates a low limit switch and thereby automatically supplies water to the storage batteries, and when the electrolyte level is increased to be higher than an upper limit, the floater activates an upper limit switch to stop the supply of water, so as to maintain a height of electrolyte level in the storage batteries, and wherein for a peak voltage of solar cell is about 0.48V and a rated voltage of storage battery is 1.2V, a ratio n/m of the number n of the solar cells to the number m of the storage batteries is within the range of 3.5 to 4.0.

With the solar power generating system of the invention, a damage of storage batteries, which use electrolyte, due to an excessive water loss, could be avoided by automatically supplying water to the batteries with the water-filling device. Even in a case that the storage batteries are occasionally overcharged, the power generating system could normally work.

### Brief Description of the Drawings

Fig. 1 is a block diagram showing a solar power generating system according to the invention.
Fig. 2 is a schematic diagram showing a water-filling device for a storage battery, which is used in the solar power generating system of Fig. 1.
Fig. 3 is a circuit diagram of the control circuit used in the water-filling device for storage battery of Fig. 2.

### Detailed Description of the Invention

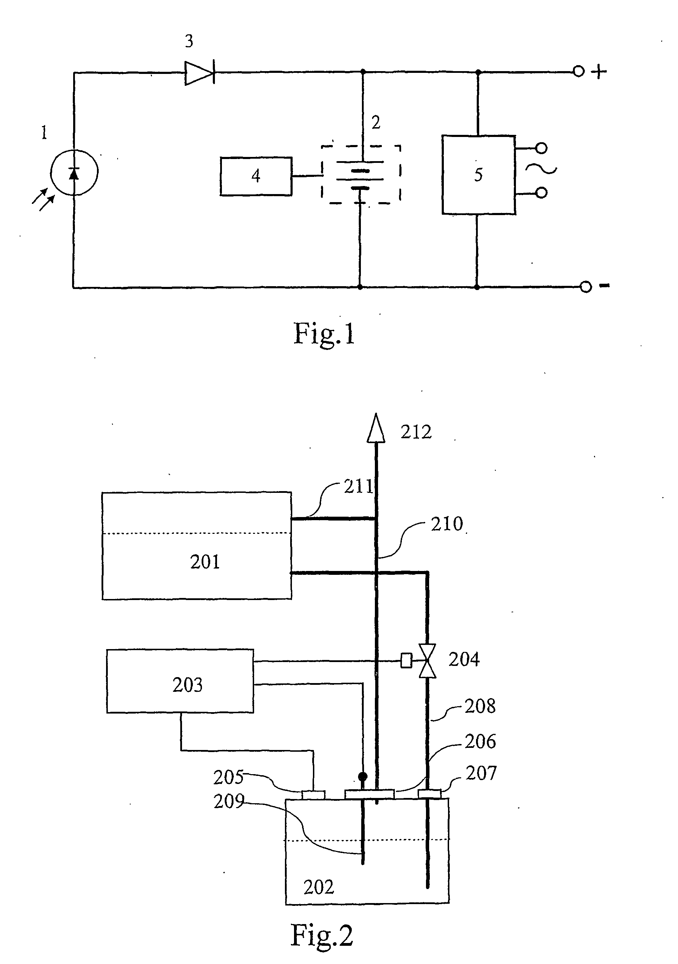

Fig. 1 is a schematic diagram showing a solar power generating system according to the invention. The solar power generating system comprises solar cells 1 for converting solar energy to electric energy, storage batteries 2 for storing the electric energy, and a diode 3 connected in series between the solar cells 1 and the storage batteries 2. An anode of the diode 3 is electrically connected to the positive electrode of the solar cells, and a cathode of the diode 3 is electrically connected to the positive electrode of the storage batteries 2, and a negative electrode of the solar cells 1 is electrically connected to a negative electrode of the storage batteries 2. The function of the diode 3 is to protect against a reverse charge when an output voltage of the solar cells 1 is lower than a terminal voltage of the storage batteries 2.

Moreover, the power generating system comprises a water-filling device 4 coupled to the storage batteries 2. When the power generating system works, the water-filling device detects an amount of lost water in the storage batteries. In a case that the amount of lost water in the storage batteries is larger than a limit, the water-filling device will supply water to the batteries, so as to maintain a height of electrolyte level in the storage batteries.

Depending on the requirement of a load, the storage batteries could either directly supply a DC current to a load, or supply an AC current to the load after the DC output of the storage batteries is converted to an AC output. For example, the load could be an electrodeless discharge lamp assembly.

The solar cells 1 could be for example an assembly comprised of a plurality of solar cells, each of which is made of single crystal or poly or amorphous silicon and are connected in series. Each solar cell provides a peak voltage of about 0.48 V, and thus an assembly comprised of 36 solar cells in series provides a peak voltage in the range of 16.5V-17.2V. The peak voltage herein means an output voltage of the solar cells under a standard light intensity when an output power reaches maximum value. For a stack of storage batteries having a rated voltage of 12 V (i.e. a stack comprised of 10 batteries connected in series each having a rated voltage of 1.2 V), the voltage required for fullcharge is about 17.5 V. Since the peak voltage of the assembly of solar cells is a little lower than the voltage required for fullcharge, the storage batteries could not reach their full capacity when an assembly comprised of 36 solar cells charges a stack of storage batteries rated 12 V.

The inventor found that an output voltage of the assembly of solar cells could be higher than the voltage required for charging the stack of storage batteries to their full capacity, if the number of the stack of storage batteries was reduced. Nevertheless, if an output voltage of the assembly of solar cells is excessively high, there will be too many solar cells used for a stack of storage batteries having the rated voltage, which leads to an increase of the cost of the solar power generating system. Moreover, when the output voltage of the assembly of solar cells is larger than an overcharge voltage of the stack of storage batteries, the storage batteries will be damaged, or a lifetime of the storage batteries will be shortened. Therefore, a ratio of the number of the solar cells to the number of the storage batteries should be carefully determined so that an output voltage of the stack of solar cells is slightly higher than a fullcharge voltage of the stack of storage batteries.

In the power generating system of the invention, when the peak voltage of each solar cell in the assembly 1 is about 0.48 V, and a rated voltage of each storage battery in the stack 2 is 1.2 V, the ratio of the number n of the solar cells in the assembly to the number m of the storage batteries in the stack (i.e. n/m) is within the range of 3.5 to 4.0.

Moreover, in a case that the storage batteries are used directly as a load of the solar cells, an internal resistance of the storage batteries should be carefully selected. As known by those skilled in the field, an output voltage of solar cells is varied with a change of the resistance of a load. The lower limit of the internal resistance of the stack of storage batteries could be determined under the condition that each solar cell in the assembly outputs a voltage of 0.36 V, so that an output voltage of the assembly of solar cells is no less than a fullcharge voltage of the stack of storage batteries.

Preferably, a power matching between the solar cells and the storage batteries is taken into consideration for a determination of the internal resistance of the storage batteries. Solar cells could provide a maximum output power only under the condition that a resistance of the load is optimum. A larger or smaller internal resistance of the load will cause a decrease of the output power of the solar cell, and thus a decrease of the charging efficiency of the whole system. Thus, the internal resistance of the stack of storage batteries should be set near an optimum value of the resistance of the load (i.e. the resistance of the assembly of solar cells), which assures that the electric energy is supplied to the stack of storage batteries under the condition of maximum output power, and thus an optimum charging efficiency. Preferably, an upper limit of the internal resistance of each battery in the stack could be determined under the condition that an output power of each solar cell in the assembly reaches a maximum value under a standard light intensity, which corresponds to an output voltage of 0.48 V. However, it should be understood that the output power of each solar cell decreases not too much even in a case that the output voltage reaches 0.5 V. As for a determination of a lower limit of the internal resistance of each battery in the stack, not only should each solar cell in the assembly reach a sufficient output power, it should also supply an output voltage no less than a fullcharge voltage of each battery in the stack. Actually, the latter is a key factor in a determination of the lower limit. Consequently, as discussed above, the lower limit of the internal resistance of the stack of storage batteries could be determined under the condition that each solar cell in the assembly outputs a voltage of 0.36 V.

The storage batteries having different internal resistances are commercially available. For example, these storage batteries could be selected from the products of Taihang Power Source Incorporated Company, XinXiang, P. R. China (trademark Taihang).

Fig. 2 is a schematic diagram showing a water-filling device for a storage battery according to the invention. A water tank 201 contains in advance an amount of water sufficient to compensate the water lost in the lifetime of a storage battery. An upper port (not shown) for connecting to an air tube 211 is disposed at an upper portion of the water tank (above a presetting electrolyte level, as indicated by a broken line in the water tank 201 in Fig. 2), and a lower port (not shown) for connecting to a water tube 208 is disposed at a lower portion of the water-supply tank (below the presetting electrolyte level).

A vent tube 210 is disposed in a lid 206 covering a balancing hole of the storage battery 202 for balancing pressure. The vent tube 210 communicates with the atmosphere via a one-way valve 212, so that a product gas, as a result of the reaction in the storage battery, could be discharged to the atmosphere to avoid a damage of the storage battery by a high internal pressure. Meanwhile, the storage battery is isolated from the air to avoid a deterioration of the electrolyte by a reaction with the air. The vent tube 210 communicates with the air tube 211, so as to keep a balance of the pressure in the water tank 201 and the storage battery 202, and thus the water in the water tank could flow into the storage battery.

Although an interior of the water tank and that of the storage battery communicate with each other for air flow, the water tank is sealed after the water is injected into it in advance. Consequently, the storage battery could not communicate with the air in the atmosphere via the water tank, which provides isolation between the storage battery and the air.

A lid 207 covers a water-injection hole of the storage battery. A water-injection tube 208 is inserted into the lid 207 and into an interior of the storage battery 201, and reaches a bottom of the storage battery (below the working level as indicated by the broken line in the storage battery 202 in Fig. 2). As discussed above, because the pressure in the water tank 201 and that in the storage battery 202 are balanced, the water in the water tank could flow into the storage battery due to a gravitational force. An electromagnetic valve 204 is disposed in the path of the water-injection tube 208 between the water tank 201 and the storage battery 202.

An open state and a close state of the electromagnetic valve 204 are controlled by a controller 203. The controller is connected to a positive electrode and a negative electrode of the storage battery by wirings (denoted by reference numeral 205 in Fig. 2), so that the electric power is supplied from the storage battery itself.

An electrolyte level sensor 209, which is used to detect both an upper limit and a lower limit of the electrolyte level in the storage battery, is also disposed in the lid covering the balancing hole. In a normal state that the water is not injected into the storage battery (i.e., the electrolyte level has a height as indicated by the broken line in the storage battery 202, as shown in Fig. 2), the electrolyte level detector 209 determines that the electrolyte level is within a range between the lower limit and the upper limit. When a detected signal indicates that an amount of lost water in the storage battery is larger than a prescribed value, i.e. the electrolyte level detector 209 detects that the electrolyte level is lower than the lower limit, the controller 203 turns the electromagnetic valve 204 on so as to inject water into the storage battery. After a sufficient amount of water has been injected, i.e. the electrolyte level sensor 209 detects that the electrolyte level is higher than the upper limit, the controller 203 turns the electromagnetic valve 204 off so as to stop injecting water.

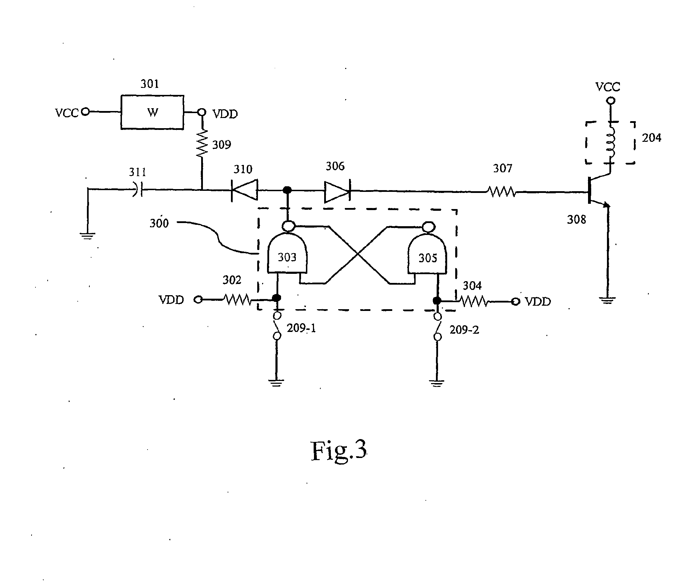

Fig. 3 is a circuit diagram of the control circuit used in the water-filling device for the storage battery of Fig. 2. A power source VCC of 12 V, which is supplied from the storage battery, is converted to a stable VDD of 8V by a voltage regulator 301. The voltage is supplied to a RS flip-flop 300 comprised of two NAND gates 303, 305. The controller also includes a startup reset circuit comprised of a resistor 309, a diode 310 and a capacitor 311, so as to set an output of the RS flip-flop to a low potential at the startup.

The electrolyte level sensor 209 is shown as two switches 209-1 and 209-2, indicating an upper limit and a lower limit of the electrolyte level, respectively. The electrolyte level sensor 209 comprises a floater in the electrolyte solution. When the electrolyte level is decreased to be lower than the lower limit, the floater will activate the corresponding switch 209-1. Similarly, when the electrolyte level is increased to be higher than the upper limit, the floater will activate the corresponding switch 209-2.

In a normal state that no supplement of water is needed, both switches 209-1 and 209-2 are open. Since the startup reset circuit sets an output of the flip-flop 300 at a low potential at the startup, the flip-flop outputs a low potential and turn the electromagnetic valve 204 off. When the electrolyte level is decreased due to the water loss in the storage battery and the floater reaches the position corresponding to the lower limit switch, the switch 209-1 will be closed, while the switch 209-2 is still in an open state. Thus, the flip-flop 300 outputs a high potential. The high potential is supplied to a driving transistor 308 via a rectifying diode 306 and a current-limiting resistor 307, so that the driving transistor 308 is in a conductive state and activates the electromagnetic valve to inject water. When the electrolyte level is increased, the switch 209-1 will be in an open state, and the switch 209-2 will also be in an open state. Thus, the flip-flop 300 retains a high potential and continues water injection. When the floater reaches a position corresponding to the upper limit switch, the switch 209-2 will be closed, the flip-flop outputs a low potential and the driving transistor 308 will be in a nonconductive state, so that the electromagnetic valve is turned off to stop water injection. Thus, by using of the above controller, the electrolyte level in the storage battery 202 could be within the range between the lower limit and the upper limit determined by the electrolyte level sensor 209.

As a variation of the above embodiment, the water-injection tube 208, the electrolyte level sensor 209 and the vent tube 210 are disposed in the same lid, for example in the lid 207 covering the water-injection hole. With only one hole (water-injection hole) into the storage battery, the invention could be applied to a conventional storage battery having only a water-injection hole. Moreover, a vent hole is also disposed in a lid covering the water-injection hole.

In an embodiment of the invention, the water-filling device and the storage battery are sealed to form a storage battery assembly. Since the controller in the water-filling device is powered by the storage battery itself, the storage battery assembly could work independently, without a need of an external power source.

In another embodiment, the invention comprises a stack of many storage batteries, each of which is provide with a water tank, a controller, an electrolyte level sensor, and a water-injection tube.

As a variation of the above embodiment, the invention comprises a stack of many storage batteries, each of which is provided with an electrolyte level detector and a water-injection tube, but all of which have a common water tank, and a common controller.

It could be understood, the invention requires no change of the internal structure of a storage battery. A water-injection tube, an electrolyte level sensor and a vent tube could be disposed in a lid covering either a balancing hole or a water injection hole of a conventional storage battery. That is, the invention could be easily applied to a conventional storage battery.

By using the above water-filling device, the invention solves the problem in charging the storage batteries with the solar cells. In the proposed solution, an output voltage of the solar cells is allowed to be larger than an overcharge voltage of the storage batteries, because the water loss due to an excessively high charging voltage could be compensated automatically by the water-filling device to assure a stable operation of the whole solar power generating system.

In the invention, not only is a water-filling device used, but also a ratio of the number n of the solar cells in the assembly to the number m of the storage batteries in the stack (i.e. n/m) is within the range of 3.5 to 4.0, so that an output of the solar cells is slightly higher than an fullcharge voltage of the storage batteries. In the charging procedure, the charging voltage is mostly lower than an overcharge voltage, i.e. within a safe voltage range. Even if an output voltage of the solar cells are occasionally larger than an overcharge voltage due to a strong light intensity or the like, and thus an amount of lost water is great, the water-filling device could inject water into the storage batteries so that the storage batteries works effectively

In a more preferred embodiment, an internal resistance of the storage battery is further selected so that an output voltage of the solar cell is about 0.48 V under a standard light intensity, and thus an output power of the solar cell is maximum and optimum charging efficiency is achieved.

Although the present invention has been described with reference to preferred embodiments, those skilled in the art will recognize that the invention could be embodied in different forms, and various changes, variations, modifications may be made without departing from the scope of the invention. Therefore, the described embodiments are to be considered in all respects only as illustrative and not restrictive.

## Claims

1. A solar power generating system, comprising solar cells, storage batteries, and a diode connected in series between the solar cells and the storage batteries, an anode and a cathode of the diode being connected to a positive electrode of the solar cells and a positive electrode of the storage batteries, respectively,
wherein the solar cells directly charges the storage batteries, and the solar power generating system also comprises a water-filling device coupled to the storage batteries, which detects an amount of lost water in the storage batteries by using an electrolyte level sensor, the electrolyte level sensor comprising a floater in the electrolyte solution, when the electrolyte level is decreased to be lower than a lower limit, the floater activates a low limit switch and thereby automatically supplies water to the storage batteries, and when the electrolyte level is increased to be higher than an upper limit, the floater activates an upper limit switch to stop the supply of water, so as to maintain a height of electrolyte level in the storage batteries, and wherein for a peak voltage of solar cell is about 0.48V and a rated voltage of storage battery is 1.2V, a ratio n/m of the number n of the solar cells to the number m of the storage batteries is within the range of 3.5 to 4.0.

2. The solar power generating system according to claim 1, wherein the water-filling device comprises a water tank containing the water to be supplied to the storage batteries, said water tank communicating with an interior of the storage batteries; an electromagnetic valve disposed in a path of water injection; an electrolyte level sensor disposed in the storage batteries; and a controller for processing detected signals of the electrolyte level sensor so as to control an open and a close of the electromagnetic valve,
wherein when the electrolyte level detector detects that the electrolyte level is lower than a lower limit, the controller turns the electromagnetic valve on so as to inject water into the storage battery, and after the electrolyte level sensor detects that the electrolyte level is higher than an upper limit, the controller turns the electromagnetic valve off so as to stop injecting water.

3. The solar power generating system according to claim 2, wherein the water tank is sealed after a prescribed amount of water is injected into it, so that the water tank communicates only with the storage batteries.

4. The solar power generating system according to claim 3, wherein the water-filling device comprises a one-way valve disposed in a vent tube, so that a product gas in the storage batteries could be discharged to the atmosphere, while the air is isolated from an interior of the storage batteries.

5. The solar power generating system according to any one of claims 1-4, an internal resistance of the storage batteries is selected so that each of the solar cells outputs a voltage of 0.36-0.5 V under a standard light intensity.

6. The solar power generating system according to claim 5, an internal resistance of the storage batteries is selected so that each of the solar cells outputs a voltage of 0.48 V under a standard light intensity, so that an output power of each of the solar cells is maximum.

7. The solar power generating system according to any of claims 1 to 4, wherein the storage batteries directly supply the electric energy to a load.

8. The solar power generating system according to any of claims 1 to 4, wherein an output of the storage batteries is supplied to a load after the a DC voltage is converted to an AC output by a voltage converter.

9. The solar power generating system according to claim 8, wherein the load is an electrodeless discharge lamp assembly.

## Patentansprüche

1. Solarstromerzeugungssystem, welches Solarzellen, Speicherbatterien und eine zwischen den Solarzellen und den Speicherbatterien in Reihe geschaltete Diode umfasst, wobei eine Anode und eine Kathode der Diode mit einer positiven Elektrode der Solarzellen bzw. einer positiven Elektrode der Speicherbatterien verbunden sind,
wobei die Solarzellen direkt die Speicherbatterien laden und das Solarstromerzeugungssystem außerdem eine mit den Speicherbatterien gekoppelte Wassereinfüllvorrichtung umfasst, welche eine Menge von verloren gegangenem Wasser in den Speicherbatterien unter Verwendung eines Elektrolytniveausensors detektiert, wobei der Elektrolytniveausensor einen Schwimmer in der Elektrolytlösung umfasst, wobei, wenn das Elektrolytniveau gesenkt wird, so dass es niedriger als ein unterer Grenzwert ist, der Schwimmer einen unteren Grenzschalter aktiviert und dadurch automatisch den Speicherbatterien Wasser zuführt, und wenn das Elektrolytniveau erhöht wird, so dass es höher als ein oberer Grenzwert ist, der Schwimmer einen oberen Grenzschalter aktiviert, um die Zufuhr von Wasser zu stoppen, so dass eine Höhe des Elektrolytniveaus in den Speicherbatterien aufrechterhalten wird, und wobei für eine Spitzenspannung einer Solarzelle von etwa 0,48 V und eine Nennspannung einer Speicherbatterie von 1,2 V ein Verhältnis n/m der Anzahl n der Solarzellen zur Anzahl m der Speicherbatterien innerhalb des Bereiches von 3,5 bis 4,0 liegt.

2. Solarstromerzeugungssystem nach Anspruch 1, wobei die Wassereinfüllvorrichtung umfasst: einen Wassertank, der das den Speicherbatterien zuzuführende Wasser enthält, wobei der Wassertank mit einem Inneren der Speicherbatterien kommuniziert; ein elektromagnetisches Ventil, das in einem Weg der Wassereinspritzung angeordnet ist; einen Elektrolytniveausensor, der in den Speicherbatterien angeordnet ist; und eine Steuereinrichtung zum Verarbeiten detektierter Signale des Elektrolytniveausensors, um ein Öffnen und ein Schließen des elektromagnetischen Ventils zu steuern, wobei, wenn der Elektrolytniveausensor detektiert, dass das Elektrolytniveau niedriger als ein unterer Grenzwert ist, die Steuereinrichtung das elektromagnetische Ventil einschaltet, um Wasser in die Speicherbatterie einzuspritzen, und nachdem der Elektrolytniveausensor detektiert, dass das Elektrolytniveau höher als ein oberer Grenzwert ist, die Steuereinrichtung das elektromagnetische Ventil ausschaltet, um das Einspritzen von Wasser zu stoppen.

3. Solarstromerzeugungssystem nach Anspruch 2, wobei der Wassertank abgedichtet wird, nachdem eine vorgeschriebene Menge an Wasser in ihn eingespeist wurde, so dass der Wassertank nur mit den Speicherbatterien kommuniziert.

4. Solarstromerzeugungssystem nach Anspruch 3, wobei die Wassereinfüllvorrichtung ein Einwegventil umfasst, das in einem Entlüftungsrohr angeordnet ist, so dass ein Produktgas in den Speicherbatterien in die Atmosphäre abgegeben werden kann, während die Luft von einem Inneren der Speicherbatterien isoliert ist.

5. Solarstromerzeugungssystem nach einem der Ansprüche 1 bis 4, wobei ein Innenwiderstand der Speicherbatterien so gewählt ist, dass jede der Solarzellen bei einer standardmäßigen Lichtintensität eine Spannung von 0,36 - 0,5 V abgibt.

6. Solarstromerzeugungssystem nach Anspruch 5, wobei ein Innenwiderstand der Speicherbatterien so gewählt ist, dass jede der Solarzellen bei einer standardmäßigen Lichtintensität eine Spannung von 0,48 V abgibt, so dass eine Ausgangsleistung jeder der Solarzellen maximal ist.

7. Solarstromerzeugungssystem nach einem der Ansprüche 1 bis 4, wobei die Speicherbatterien die elektrische Energie direkt einer Last zuführen.

8. Solarstromerzeugungssystem nach einem der Ansprüche 1 bis 4, wobei ein Ausgang der Speicherbatterien einer Last zugeführt wird, nachdem die DC-Spannung durch einen Spannungswandler in einen AC-Ausgang umgewandelt wurde.

9. Solarstromerzeugungssystem nach Anspruch 8, wobei die Last eine elektrodenlose Entladungslampenanordnung ist.

## Revendications

1. Système de production d'énergie solaire, comprenant des cellules solaires, des batteries de stockage et une diode connectée en série entre les cellules solaires et les batteries de stockage, une anode et une cathode de la diode étant connectées respectivement à une électrode positive des cellules solaires et à une électrode positive des batteries de stockage,
dans lequel les cellules solaires chargent directement les batteries de stockage, et le système de production d'énergie solaire comprend également un dispositif de remplissage d'eau, accouplé aux batteries de stockage et détectant une quantité d'eau perdue dans les batteries de stockage, en utilisant un capteur de niveau électrolytique, le capteur de niveau électrolytique comprenant un flotteur dans la solution électrolytique, lorsque le niveau électrolytique est diminué en-dessous d'une limite inférieure, le flotteur active un interrupteur de limite basse, alimentant ainsi automatiquement de l'eau aux batteries de stockage, et lorsque le niveau électrolytique est augmenté au-delà d'une limite supérieure, le flotteur active un interrupteur de limite haute, pour arrêter l'alimentation d'eau, de manière à maintenir une hauteur de niveau électrolytique dans les batteries de stockage, et dans lequel, pour une tension de crête de cellule solaire d'environ 0,48 V et une tension nominale de batterie de stockage de 1,2 V, un rapport n/m entre le nombre n de cellules solaires et le nombre m de batteries de stockage se situe dans l'intervalle de 3,5 à 4,0.

2. Système de production d'énergie solaire selon la revendication 1, dans lequel le dispositif de remplissage d'eau comprend une citerne à eau contenant l'eau à fournir aux batteries de stockage, ladite citerne à eau communiquant avec un intérieur des batteries de stockage ; une valve électromagnétique disposée dans un passage d'injection d'eau ; un capteur de niveau électrolytique disposé dans les batteries de stockage ; et un contrôleur pour traiter des signaux détectés du capteur de niveau électrolytique, de manière à commander une ouverture et une fermeture de la valve électromagnétique,
dans lequel, lorsque le capteur de niveau électrolytique détecte que le niveau électrolytique est inférieur à une limite inférieure, le contrôleur met en marche la valve électromagnétique, de manière à injecter de l'eau dans la batterie de stockage et, une fois que le capteur de niveau électrolytique a détecté que le niveau électrolytique est supérieur à une limite supérieure, le contrôleur arrête la valve électromagnétique, afin d'arrêter l'injection d'eau.

3. Système de production d'énergie solaire selon la revendication 2, dans lequel la citerne à eau est scellée une fois qu'une quantité prescrite d'eau a été injectée dans celle-ci, de sorte que la citerne à eau communique uniquement avec les batteries de stockage.

4. Système de production d'énergie solaire selon la revendication 3, dans lequel le dispositif de remplissage d'eau comprend un clapet anti-retour disposé dans un tube de mise à l'air libre, de manière à ce qu'un produit gazeux contenu dans les batteries de stockage puisse être déchargé dans l'atmosphère, tandis que l'air est isolé par rapport à un intérieur des batteries de stockage.

5. Système de production d'énergie solaire selon l'une quelconque des revendications 1 à 4, dans lequel une résistance interne des batteries de stockage est sélectionnée de manière à ce que chacune des cellules solaires produise une tension de 0,36 à 0,5 V, sous intensité lumineuse standard.

6. Système de production d'énergie solaire selon la revendication 5, dans lequel une résistance interne des batteries de stockage est sélectionnée de manière à ce que chacune des cellules solaires produise une tension de 0,48 V sous intensité lumineuse standard, afin qu'un courant de sortie de chacune des cellules solaires soit au maximum.

7. Système de production d'énergie solaire selon l'une quelconque des revendications 1 à 4, dans lequel les batteries de stockage fournissent directement l'énergie électrique à une charge.

8. Système de production d'énergie solaire selon l'une quelconque des revendications 1 à 4, dans lequel une sortie des batteries de stockage est fournie à une charge, une fois que la tension de CC est convertie en sortie de CA par un convertisseur de tension.

9. Système de production d'énergie solaire selon la revendication 8, dans lequel la charge est un ensemble de lampe de décharge sans électrode.
